# EUROPEAN PATENT APPLICATION

(11) **EP 3 167 981 A1**
(43) Date of publication of application: **17.05.2017**
(21) Application number: 15194645.6
(22) Date of filing: 16.11.2015
(51) Int. Cl.: B22F 3/105, B29C 67/00, C04B 35/64

(54) **METHOD OF FABRICATING A COMPONENT AND MANUFACTURING SETUP**

(71) Applicant: Siemens Aktiengesellschaft, 80333 München (DE)
(72) Inventor: Simmons, Ulf, 60370 Norrkoping (SE)

(57) **Abstract**

A Method of fabricating a component (100, 100a, 100b) is pre-sented. The method comprises establishing a sacrificial structure (1, 1a, 1b) on a manufacturing platform (2), additively manufacturing of the component (100, 100a, 100b) on the sacrificial structure (1, 1a, 1b) such that a bond (3, 3a, 3b) is formed between the sacrificial structure (1) and the component (100, 100b, 100c), and separating the component (100, 100a, 100b) from the manufacturing platform (2), wherein the bond (3, 3a, 3b) of the component (100, 100a, 100b) and the sacrificial structure (1, 1a, 1b) is exposed to a separation means (8) being configured to selectively remove the sacrificial structure (1, 1a, 1b). Further, a manufacturing setup (10) for additively manufacturing of a component (100, 100a, 100b) is presented, the manufacturing setup (10) being configured to additively manufacture the sacrificial structure (1, 1a, 1b) made of a low-melting point alloy, such as: Wood's metal, Rose's metal, Field's metal, Cerrosafe, Cerrolow 136, Cerrolow 117, Cerrobend or an alloy comprising Bi, Pb, Sn, Cd, In and/or Tl.

## Description

The present invention relates to a method of fabricating a component, such as a metallic, ceramic or plastic component and a manufacturing setup for additively manufacturing said component. Further, the present invention relates to a component which is or can be fabricated by the described method. Still further, a manufacturing setup for additively manufacturing the component is presented.

Powder bed manufacturing methods such as selective laser melting or selective laser sintering are relatively well known additive fabrication methods for fabricating, prototyping or manufacturing parts or components from powder material. Conventional apparatuses or setups for such methods usually comprise a table or manufacturing or building platform on which the part or component is built layer-by-layer after the feeding of a layer of powder which is then melted by the energy of a laser beam and subsequently solidified. The layer thickness is determined by a scraper that moves, e.g. automatically over the powder bed and removes excess powder. Typical layer thicknesses amounted to 20 µm or 40 µm. During the manufacture, said laser beam scans over the surface and melts the powder on selected areas which may be predetermined by a CAD-file according to the geometry of the component to be fabricated.

The powder bed manufacturing process is known from DE 10 2013 222 865 A1, for example.

After the buildup or manufacture the manufacturing platform is removed from the setup and the as-manufactured component has to be separated from the platform by means of machining, e.g. electrical discharge machining (EDM) or saw cutting. As a drawback of the mentioned sawing or saw cutting, said component may be subjected to mechanical cutting forces, stresses or strain which may adversely affect or deform the manufactured component. After the cutting, the cutting surfaces of the component as well as those of the manufacturing platform are usually required to be post-machined. In the latter case of separating the component by means of EDM, a tank with a dielectric liquid, such as water, may be contaminated by the powder of the respective powder bed, whereby a significant drawback to the total manufacturing process is posed. Conventional means to separate an additively manufactured component from its manufacturing platform may further comprise the use of snap- or easy-to-break structures, wherein no cutting or sawing is required. However a post-machining process step is required anyway.

The term "additive" in the context of manufacturing shall particularly denote a layer-wise, generative and/or bottom-up manufacturing process. The additive manufacturing as described herein may be or relate to rapid prototyping.

It is therefore an object of the present invention to provide means to improve an additive manufacturing or fabrication process by a measure for separating an as-manufactured component from an underlying structure, such as a corresponding manufacturing platform.

This object is achieved by the subject-matter of the independent claims. Advantages embodiments and refinements are subject-matter of the dependent claims.

An aspect of the present invention relates to a method of fabricating a component comprising establishing of a sacrificial structure on a manufacturing platform. Therefore, prior to the establishing, the manufacturing platform, such as a manufacturing plate or board or support structure may be provided. The sacrificial structure may be established on or on top of the manufacturing platform by any expedient technique. The sacrificial structure may as well be established by means of an additive manufacturing technique as described herein. The method further comprises additively manufacturing of the component on the sacrificial structure, e.g. according to the desired geometry, e.g. in a manufacturing setup such that a bond or fixture is formed between the sacrificial structure and the component. Said bond may be a metallurgic or adhesive bond.

The method further comprises separating the component from the manufacturing platform, wherein the bond of or between the component and the sacrificial structure is exposed to a separation means being configured to selectively remove the sacrificial structure.

The term "selectively" preferably indicates that only the sacrificial structure or - as the case may be a material thereof - is removed by the separation means. Thereby, a material of the manufacturing platform and/or the component is preferably not removed as in the case of a separation by means of machining as mentioned above.

In an embodiment, the sacrificial structure is a sacrificial layer. Said sacrificial layer may in turn comprise a plurality of (single) layers which are characteristic to a selective laser melting process, for example.

A further aspect of the present invention relates to a manufacturing setup for additively manufacturing of the component. The manufacturing setup comprises the manufacturing platform, wherein the manufacturing setup is configured to additively manufacture a sacrificial structure being made of a low melting point alloy, such as: Wood's metal, Rose's metal, Field's metal, Cerrosafe, Cerrolow 136, Cerrolow 117, Cerrobend or an alloy comprising Bi, Pb, Sn, Cd, In and/or Tl.

In an embodiment, the manufacturing setup further comprises a facility for exposing the component being bonded to the sacrificial structure to a separation means for separating the component from the manufacturing platform.

As an advantage the separation of an as-manufactured component may be simplified or eased, as the mentioned component may be prevented from being exposed to mechanical cutting forces, as the component may be selectively removed from the sacrificial structure. Further drawbacks as described above in combination with the electrical discharge machining may as well be overcome.

In an embodiment, the separation means comprises physical and/or chemical means.

In an embodiment the selective removal is carried out without the use of machining. Thereby, it may be achieved that the component is not adversely deformed or exposed to mechanical forces or stresses when said component is being separated from the manufacturing platform after the manufacture.

In an embodiment the sacrificial structure is removed in that the sacrificial structure is melted when it is exposed to the separation means. Thereby, an expedient way to separate the component from the manufacturing platform is provided.

In an embodiment the separation means comprises hot or boiling water. The term "hot" preferably relates to water with a temperature above 60 °C, preferably above 80 °C, more preferably above 90 °C under standard pressure conditions.

In an embodiment the separation means comprises a liquid or flux liquid being configured to melt the sacrificial structure when the sacrificial structure is exposed to the separation means.

In an embodiment the sacrificial structure is made of a low melting point alloy.

In an embodiment the material of the sacrificial structure has a melting point below a temperature of 100 °C, preferably below or equal to 80 °C. According to this embodiment, the sacrificial structure may expediently be selectively removed and the bond of or between the component and the sacrificial structure be solved. According to the mentioned low melting point of the sacrificial structure, the sacrificial structure may in particular easily be melted by the separation means.

In an embodiment the sacrificial structure is made of at least one of the following materials or alloys: Wood's metal, Rose's metal, Field's metal, Cerrosafe, Cerrolow 136, Cerrolow 117, Cerrobend and an alloy comprising Bi, Pb, Sn, Cd, In and/or Tl. According to this embodiment, the sacrificial structure may advantageously be embodied to have a low melting point, as mentioned above.

In this regard, the present invention may relate to the use of at least one, several or all of the previously mentioned materials for the separation of an additively manufactured component from a manufacturing platform.

In an embodiment the separation means is a solvent and the material of the sacrificial structure is chosen such that it is removed in that the sacrificial structure is dissolved when the bond is exposed to the separation means. According to this embodiment, a further expedient way to separate the component from the manufacturing platform is presented.

In an embodiment, the separation means is heat emitted from a heat source such as a heating plate, a radiation source or an infrared lamp.

In an embodiment the manufacturing platform is or is denoted as or comprises a pre-manufactured structure or component. In this regard, the mentioned pre-manufactured component or structure thereof may in turn have been built on a manufacturing platform.

In an embodiment the sacrificial structure is additively manufactured in the manufacturing setup according to the presented method.

In an embodiment, after the additive manufacturing of the component, a further sacrificial structure is established on the component in the manufacturing setup. Then, the method comprises additively manufacturing of a further component on the further sacrificial structure, preferably by the same additive manufacturing technique, such that a further bond or fixture is formed between the further sacrificial structure and the further component. During the separating of the component from the manufacturing platform the component is also separated from the further component, when the further bond is exposed to the separation means. The separation means is expediently also configured to selectively remove the further sacrificial structure, as described.

In other words, within the described method of additive manufacturing, a plurality of components may, according to this embodiment, be manufactured consecutively, each of which being interposed with a sacrificial structure. The separating is then performed such that each of the mentioned components may be separated from the remaining ones and/or from the manufacturing platform or plate.

In an embodiment the manufacturing setup is a setup for selective laser melting or selective laser sintering. Accordingly, the additive manufacturing is a selective laser melting or selective laser sintering technique.

In an embodiment the separating is carried out such that the material of the sacrificial structure is recyclable for a subsequent manufacture or fabrication of another or further component, for example.

A further aspect of the present invention relates to a component which is or can be fabricated by the method as described herein. The component is - owed to the presented method of fabrication - advantageously free of any stress or strain, that may arise during conventional techniques by which the component is separated from the platform e.g. by means of machining.

Features or advantages pertaining to the method or the component may as well relate to the manufacturing setup or vice versa.

The present invention is further described hereinafter with reference to illustrated embodiments shown in the accompanying drawings.
- Figure 1: shows in a schematic a manufacturing setup for the manufacturing or fabrication of a component.
- Figure 2: shows in a schematic a manufacturing setup for the manufacturing of fabrication of a plurality of components.
- Figure 3: indicates in a schematic the fabrication of at least one component.

Various embodiments are described with reference to the drawings, wherein like reference numerals are used to refer to like elements throughout. In the following description, for the purpose of explanation, numerous specific details are set forth in order to provide a thorough understanding of one or more embodiments. It may be evident that such embodiments may be practiced without these specific details.

According to the described Figures, a method of fabricating a component or a plurality of components is described. The component or the plurality of components are preferably manufactured and/or fabricated by means of an additive manufacturing technique, preferably a powder-based technique, such as selective laser melting (SLM) or selective laser sintering (SLS).

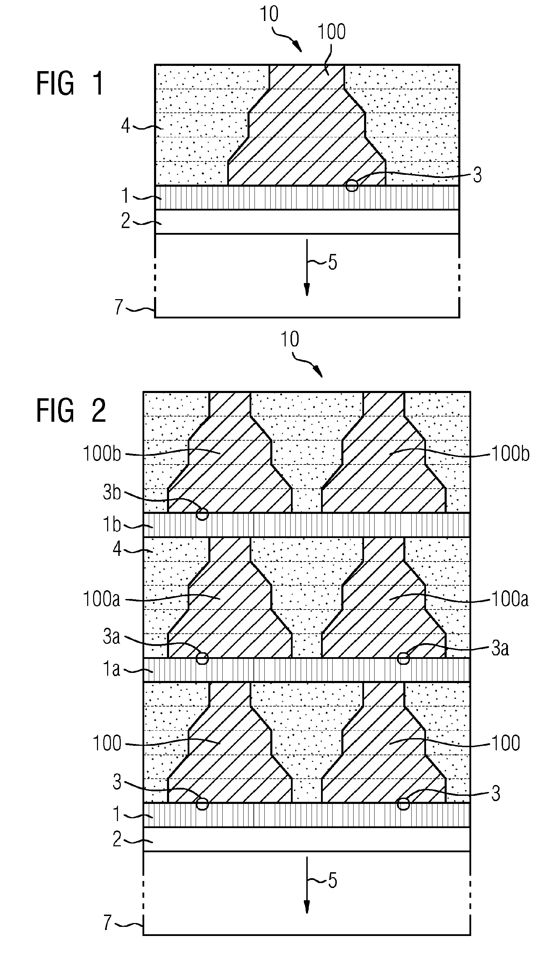

Figure 1 shows in a schematic a manufacturing setup 10 for the manufacturing and/or fabrication of a component 100. The manufacturing setup 10 comprises a manufacturing platform 2, plate, board or buildup platform. The component 100 may be a plastic, ceramic or metallic component, for example. Therefore, said manufacturing setup 10 is preferably configured to additively manufacture the component being made of the mentioned materials. Particularly, said manufacturing setup 10 may be configured to process Ni- or Co-based superalloys or the respective raw materials, e.g. for the manufacture of turbine components such as turbine blades or vanes.

According to the presented method, a sacrificial structure 1 is established on or on top of the manufacturing platform 2. The sacrificial structure 1 is preferably a sacrificial layer. However, the sacrificial structure 1 may as well have a non-layer like geometry. The sacrificial structure 1 may further be established or deposited by any suitable means or techniques. For example, the sacrificial structure 1 may be pre-deposited onto the manufacturing platform 2 and only then mounted to the manufacturing apparatus 10 for the subsequent manufacture of the component 100.

The sacrificial structure 1 is preferably an auxiliary structure which is completely being removed after the manufacture in order to provide or fabricate the component. As an example, the sacrificial structure 1 may be made of a low melting point alloy. The sacrificial structure 1 may particularly be made of at least one of the following materials: Wood's metal, Rose's metal, Field's metal, Cerrosafe, Cerrolow 136, Cerrolow 117, Cerrobend and an alloy comprising at least one or several of the elements Bi, Pb, Sn, Cd, In and Tl. Preferably, the sacrificial structure 1 is made of a material with a melting point below a temperature of 100 °C, preferably below a temperature of 80 °C (under standard pressure conditions). Accordingly, the manufacturing setup is preferably configured to manufacture the previously mentioned materials or process said materials for the manufacture.

As shown in Figure 1 for instance, the method further comprises additively manufacturing the component 100 on the sacrificial structure 1. The component 100 is preferably manufactured or established on the sacrificial structure 1 such that a bond 3 (indicated by the circle) is formed between the sacrificial structure 1 and the component 100. The bond 3 is preferably an adhesive or - in the case of metallic components - a metallurgic bond.

Generally, an SLM-technique comprises the manufacturing of a part or component layer-by-layer after the feeding of a layer of powder 4 which is molten or melted by a laser beam (not explicitly indicated in the Figures). The layer thickness is created by a scraper (also not indicated) that moves over the powder bed and removes all excess powder. The layer thickness is typically 20 µm or 40 µm. The laser beam then scans over the surface and melts and subsequently solidifies the powder 4 on selective areas according to the desired geometry of the component 100. Said geometry may be predetermined or present from a CAD-file. After the manufacturing or scanning of a first layer 6, the manufacturing platform 2 of the manufacturing setup 10 is expediently lowered by a distance corresponding to the thickness of the mentioned layer 6 (cf. arrow 5).

The component 100 as shown in Figure 1 comprises sections with vertical side faces as well as inclined side faces. Apart from the shown geometry, the component 100 may comprise any other geometry.

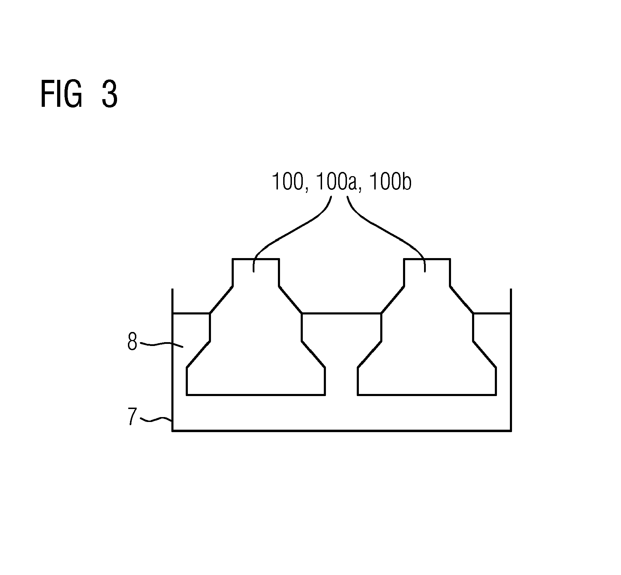

After the additive manufacturing of the component 100, the described method further comprises separating the component 100 from the manufacturing platform 2 in that the bond 3 of the component 100 and the sacrificial structure 1 is exposed to a separation means (cf. numeral 8 in Figure 3). The separation means is expediently configured to selectively remove the sacrificial structure 1, preferably by physical or chemical means (see Figure 3 below). Owing to the selective removal, the component 100 may be easily separated e.g. from the manufacturing platform 2 and particularly such that the component 100 is not exposed to machining or grinding forces of further stresses as may be the case in conventional separation or machining processes.

The separation means may particularly be or comprise a bath, thermal reservoir or heat reservoir. To this effect, the separation means may comprise any suitable liquid or soft matter.

Particularly, according to the above-mentioned embodiments of the sacrificial structure 2, e.g. as a low melting point alloy, the separation means 8 is preferably configured to melt the sacrificial structure 2. Therefore, the separation means 8 may expediently comprise hot or boiling water, such as distilled or pure water or any other suitable or expedient liquid.

Additionally or alternatively, the sacrificial structure 1 may be selectively removed by means of selective etching, for example. According to this embodiment, the separation means 8 may be or comprise a solvent or etching agent and/or be configured such that the material of or for the sacrificial structure 1 is dissolved when the bond 3 is exposed to the separation means 8.

The manufacturing setup 10 further comprises a facility 7 for exposing the component 100 (being bonded to the sacrificial structure 1) to the separation means 8 for separating the component from the manufacturing platform 2.

The facility 7 may be or comprise a tank or container with hot or boiling water or any other liquid for the separation means 8. The facility 7 may be implemented in the manufacturing setup 10 or may be an add-on being applicable or mountable to the manufacturing setup 10. For example, the facility 7 or tank may be arranged or implemented below the manufacturing platform 2 such that - after or even during the manufacture - the whole buildup comprising the manufacturing platform 2, the sacrificial structure 1 and the component 100 - or only the sacrificial structure 1 may, e.g. be immersed into the water of the separation means 8. According to the embodiment, wherein the sacrificial structure 1 is melted, the corresponding alloy will then melt according to the temperature entry. As the material of the sacrificial structure 1 is preferably not soluble in the liquid of the separation means 8, said material may easily be separated from the liquid due to its different specific gravity, density or weight. As the above-mentioned low melting point alloy may comprise lead or be heavier than water, the melted material may sediment in the bath and the ready-fabricated or manufactured component may as well easily be taken out of the facility 7.

Apart from the indication of Figure 3 (cf. below), the separation means may be or be induced by a heating plate or heat source such as an infrared lamp. Said heating plate may comprise a resistive or inductive heating. Further, said heating plate may e.g. be comprised by or embodied in the manufacturing platform 2. Accordingly, the separation means may be constituted by heat emitted from the mentioned heating plate or heat source.

Preferably, the separating or separation is carried out within the described method such that the material of the sacrificial structure 1 is recyclable for a subsequent manufacture of fabrication of another component. Said recycling may function by means of sedimentation or agglomeration of the molten material of the sacrificial structure 1 within the separation means 8 or its liquid, for example.

Figure 2 shows a schematic of the manufacturing setup 10, wherein a plurality of components are or can be manufactured or fabricated. In overall, six components are shown. In a lower row, two components 100 are indicated. In the middle row - above the lower row - two further components 100a are indicated and in the upper row two further components 100b are indicated.

Between the component 100 and the further components 100a, a further sacrificial structure 1a is disposed. Accordingly, between the further component 100a and the further component 100b, a further sacrificial structure 1b is disposed. As has already been described in conjunction with Figure 1, the further components 100a and 100b are preferably manufactured on the further sacrificial structure 1a, 1b, respectively such that further bonds 3a and 3c are formed. The further bond 3a relates to the bond of or between the further components 100a and the further sacrificial structure 1a. Accordingly, the further bond 3b relates to the bond of or between the further components 100b and the further sacrificial structure 1b.

Preferably, all of the mentioned components are of the same type and/or material, wherein the geometry of the components among each other may differ according to the individual demands. As, e.g. the components 100 are indicated directly besides each other, they may be manufactured simultaneously by means of the mentioned SLM process. Thereby, the components 100 are manufactured on top of the same sacrificial structure. The same holds mutatis mutandis for the further components 100a and 100b.

Apart from the indications in the Figures, components being arranged (partly) besides each other are not necessarily required to be aligned or arranged on the same sacrificial structure or at the same vertical position or level. Rather, any component may generally be arranged at any vertical position. Further, more than three components may be manufactured consecutively during the same manufacture or fabrication.

According to the depicted embodiment, the sacrificial structures 1, 1a and 1b are expediently established or manufactured by means of the same SLM process or additive manufacturing technique as the components 100, 100a and 100b. Therefore, the manufacturing setup 10 may particularly be configured to provide the powder of the material(s) as mentioned above. Moreover, a laser apparatus (not explicitly indicated) and a corresponding exposure of the powder with said laser may be adapted to the mentioned low melting point materials of the sacrificial structures 1, 1a, 1b e.g. in terms of laser power or further parameters.

According to the nomenclature as used herein, a manufacturing platform may as well relate to a pre-existing component. For example, the further components 100a being manufactured on top of the further sacrificial structure 1a are directly manufactured on a manufacturing platform formed by the components 100 and/or by further powder and possible support structures.

As an advantage of the embodiment described by means of Figure 2, all of the components 100, 100a, 100b may be separated from the manufacturing platform 2 as well as separated from each other by the separating step as described along with Figure 1. To this effect, the mentioned sacrificial structure is 1, 1a, 1b are expediently made of the same material. However, the materials for the components 100, 100a, 100b may differ.

Figure 3 indicates in a schematic the ready-fabricated components 100, 100a, 100b - exemplified by two components - after the described separation from the manufacturing platform 2, for example. The components 100, 100a or 100b are present or immersed in the separation means 8 in the facility 7 as described.

Although it is not explicitly indicated in the Figures, the manufacture or fabrication of the components by means of SLM may require the application of support structures, e.g. to manufacture overhanging or protruding regions of the respective component. The sacrificial structure as described herein may as well be configured to serve as a support structure for the component.

Although the invention has been described with reference to specific embodiments, this description is not meant to be construed in a limiting sense. Various modifications of the disclosed embodiments, as well as alternate embodiments of the invention will become apparent to persons skilled in the art upon reference to the description of the invention. It is therefore contemplated that such modifications can be made without departing from the embodiments of the present invention as defined.

## Claims

1. Method of fabricating a component (100, 100a, 100b) comprising the steps of:
- establishing a sacrificial structure (1, 1a, 1b) on a manufacturing platform (2),
- additively manufacturing of the component (100, 100a, 100b) on the sacrificial structure (1, 1a, 1b) such that a bond (3, 3a, 3b) is formed between the sacrificial structure (1) and the component (100, 100a, 100b), and
- separating the component (100, 100a, 100b) from the manufacturing platform (2), wherein the bond (3, 3a, 3b) of the component (100, 100a, 100b) and the sacrificial structure (1, 1a, 1b) is exposed to a separation means (8) being configured to selectively remove the sacrificial structure (1, 1a, 1b).

2. Method according to claim 1, wherein the separation means (8) comprises physical and/or chemical means and the selective removal is carried out without the use of machining.

3. Method according to claim 1 or 2, wherein the sacrificial structure (1, 1a, 1b) is removed in that the sacrificial structure (1, 1a, 1b) is melted when it is exposed to the separation means (8).

4. Method according to one of the previous claims, wherein the separation means (8) comprises hot or boiling water.

5. Method according to one of the previous claims, wherein the material of the sacrificial structure (1, 1a, 1b) has a melting point below a temperature of 100 °C, preferably below 80 °C.

6. Method according to one of the previous claims, wherein the sacrificial structure (1, 1a, 1b) is made of at least one of the following materials: Wood's metal, Rose's metal, Field's metal, Cerrosafe, Cerrolow 136, Cerrolow 117, Cerrobend and an alloy comprising Bi, Pb, Sn, Cd, In and/or Tl.

7. Method according to claim 1 or 2, wherein the separation means (8) is a solvent and the material of the sacrificial structure is chosen such that it is removed in that the sacrificial structure (1, 1a, 1b) is dissolved when the bond is exposed to the separation means (8).

8. Method according to one of the previous claims, wherein the manufacturing platform (2) comprises a pre-manufactured structure or component.

9. Method according to one of the previous claims, wherein the sacrificial structure (1, 1a, 1b) is additively manufactured in a manufacturing setup (10).

10. Method according to claim 9, wherein, after the additive manufacturing of the component (100, 100a, 100b), a further sacrificial structure (1a, 1b) is established on the component (100, 100a, 100b) in a manufacturing setup (10) and, then, the method comprises additively manufacturing of a further component (100a, 100b) on the further sacrificial structure (1a, 1b) such that a further bond (3a, 3b) is formed between the further sacrificial structure (1a) and the further component (100a, 100b), and wherein during the separating, the component (100, 100a) is also separated from the further component (100a, 100b), when the further bond (3a) is exposed to the separation means (8).

11. Method according to one of the previous claims, wherein the manufacturing setup is a setup for selective laser melting or selective laser sintering and the additive manufacturing is a selective laser melting or selective laser sintering technique.

12. Method according to one of the previous claims, wherein the separating is carried out such that the material of the sacrificial structure (1) is recyclable for a subsequent manufacture.

13. Component (100, 100a, 100b) fabricated by one of the previous claims.

14. Manufacturing setup (10) for additively manufacturing of a component (100, 100a, 100b), the manufacturing setup (10) comprising a manufacturing platform (2), wherein the manufacturing setup (10) is configured to additively manufacture a sacrificial structure (1, 1a, 1b) being made of a low-melting point alloy, such as: Wood's metal, Rose's metal, Field's metal, Cerrosafe, Cerrolow 136, Cerrolow 117, Cerrobend or an alloy comprising Bi, Pb, Sn, Cd, In and/or Tl.

15. Manufacturing setup (10) according to claim 14, further comprising a facility (7) for exposing the component being bonded to the sacrificial structure (1, 1a, 1b) to a separation means (8) for separating the component (100, 100a, 100b) from the manufacturing platform (2).
